Europäisches Patentamt

European Patent Office

Office européen des brevets

(11) Publication number: **0 075 373**
**B1**

(12) **EUROPEAN PATENT SPECIFICATION**

(45) Date of publication of patent specification: **23.04.86**

(21) Application number: **82201168.0**

(22) Date of filing: **21.09.82**

(51) Int. Cl.⁴: **B 62 J 6/00**

(54) **A circuit for feeding bicycle lights.**

(30) Priority: **22.09.81 NL 8104345**

(43) Date of publication of application:
**30.03.83 Bulletin 83/13**

(45) Publication of the grant of the patent:
**23.04.86 Bulletin 86/17**

(84) Designated Contracting States:
**AT BE CH DE FR GB IT LI LU NL SE**

(56) References cited:
**DE-A-2 434 737**
**FR-A-2 230 066**
**US-A-3 792 307**

(73) Proprietor: **Spanninga Metaal B.V.**
**Geert-Knolweg 30**
**NL-8501 MK Joure (NL)**
(73) Proprietor: **TI Raleigh B.V.**
**Wenckebachweg 157-161 Postbus 4352**
**NL-1096 AM Amsterdam (NL)**

(72) Inventor: **Spanninga, Gerard**
**Kofskip 11**
**NL-8501 SH Joure (NL)**

(74) Representative: **Mommaerts, Johan Hendrik,**
**Dipl.-Phys.**
**Octrooibureau Lux Willem Witsenplein 4**
**NL-2596 BK Den Haag (NL)**

Courier Press, Leamington Spa, England.

## Description

The invention relates to a circuit for feeding bicycle lights using the combination of direct current from a battery and alternating current from a dynamo.

In US—A—3 792 307 a circuit of this kind is described, in which the dynamo is connected to a full-wave rectifier, and the d.c. terminals of the latter are connected to the corresponding terminals of the battery via a diode which conducts the battery current but blocks the rectified dynamo current, this in such a manner that, below a given speed of the bicycle, the rectified voltage is lower than the battery voltage, and the battery will feed the lamps, whereas, above said speed, the rectified dynamo voltage will be higher than the battery voltage and the lamps will be fed by the dynamo.

Auxiliary lamps are provided in series with the battery, so that, as soon as the battery takes over the current supply, said current will flow through said auxiliary lamps and, in series therewith, also through the headlight. The latter will not be illuminated then by virtue of its lower resistance and the voltage drop across said auxiliary lights.

Said auxiliary lights, which are provided with an internal interruptor (so-called flasher lights), will give a warning to other traffic that the bicycle has a low speed or is stationary. Obviously such warning lights will provide a protection of the user in case of a slow or stationary bicycle riding on a not or badly illuminated road, since the usual reflectors will not discriminate between a riding and a stationary bicycle.

The above-mentioned diode can be short-circuited so as to charge the battery from the dynamo, and the auxiliary lights can be switched off as desired.

A draw-back of this circuit is that the battery will feed the various lights in the stationary condition during a restricted time, so that, if the user forgets to switch off the battery at a longer stationary period, the battery will be exhausted rather quickly. Another drawback of this circuit is that said auxiliary warning lights will only be active if switched on, and, if the user forgets this, said lights will not function at the moment this would be necessary.

Recharging the battery by means of the dynamo is, in practice, not effective, since one will, generally, not ride long enough for obtaining a full charge of the battery, taking into account the rather low power of the current bicycle dynamos, and keeping the dynamo in action in daylight is objectionable because of the required additional muscular effort, and, if the user forgets to do so, the battery will be insufficiently charged if the use of said warning lights would be necessary.

The invention provides a circuit of this kind in which an ordinary dry battery can be used without the risk that it will be quickly exhausted by negligence of the user, and switching on and off a warning light takes place independently of the user.

To that end the circuit of the invention is characterised by a switch connected to a battery, and by a control circuit for this switch, which control circuit comprises a stage which is sensitive for the presence of alternating voltage from the dynamo, and is designed so that, when the alternating voltage decreases below a given value, at least a rear lamp is connected by said switch in an interrupted manner to the battery during a given time, and, after said time has elapsed, the control circuit is brought in the inoperative condition in which the switch remains open, and after reestablishment of the alternating voltage, this circuit is suitable again for repeating the operation. The interruption frequency is, then, chosen so that a sufficiently conspicuous flickering light signal is obtained.

As soon as the bicycle stops and, thus, the dynamo voltage disappears, the rear light starts flickering, thus other road users being given a warning and a clear distinction from a moving bicycle being obtained, and, if desired, also at the front side a flickering signal can be given. The flickering signal is, moreover, automatically switched off, thus avoiding that at a longer standstill of the bicycle, for instance when being put away, the flickering continues. A flicker period of restricted duration, e.g. 1—2 min, is sufficient. Overtaking, crossing and, as the case may be, oncoming traffic having noticed such a flicker signal will be warned and then the purpose is reached.

Since the battery is switched on in an interrupted manner, the current consumption is reduced accordingly, and a further restriction can be obtained by using, for the flicker signal, only lamps of a small power. It has appeared to be possible then to use a small battery during a long time. Since at the reappearance of the dynamo voltage the switching period begins once more, the flicker effect can be extended by moving the bicycle in the stationary condition somewhat to and fro until a sufficient voltage has been produced for reactivating the switching circuit again.

Such a flickering light source can, in particular, be constituted by a separate low-power lamp which is, for instance, mounted in the reflector or headlight. It is also possible to use a normal rear light which comprises a low-power lamp to that end, but then isolating means should be provided for avoiding that the battery is put into connection with the dynamo.

Such a circuit can be realised, in particular, by means of a restricted number of electronic circuit parts such as diodes, transistors and the like. Particularly the element sensitive for the dynamo voltage is constituted by a first switching element having a control input connected to the dynamo terminal, which switching element, in the conducting condition, connects the battery with an RC element which is connected to the control input of an oscillator in such a manner that the latter can become active only when the capacitor is charged and the first switching element, by disappearance of the alternating voltage, has become non-conductive, and the output of this oscillator is connected to the control input of a second switching element which is adapted to connect the flicker lamp or lamps with the battery.

The charging circuit of the RC element can comprise an inverting stage connected to the output of the first switching element, said RC element and said output each being connected to an input of a gate having an output connected to the control input of the oscillator.

Such electronic circuits can be realised in a simple manner as integrated circuits making use of commercially available parts.

The invention will be elucidated below by reference to a drawing, showing in:

Fig. 1 a fundamental circuit diagram elucidating the operation of the device of the invention;

Figs. 2 and 3 modified embodiments of the circuit of Fig. 1; and

Fig. 4 a more detailed circuit diagram based on this principle.

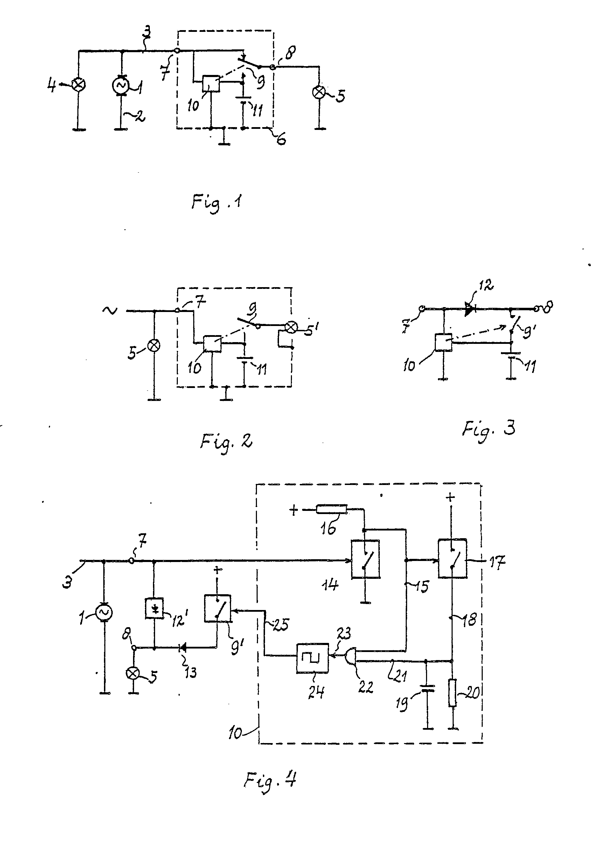

In Fig. 1 the principle of the circuit of the invention is diagrammatically shown. This circuit comprises a bicycle dynamo 1 which is, at one side at 2, connected to the mass, and, at the other side, to a lead 3 to which a headlight is connected in the usual way. This lead, furthermore, leads towards a rear light 5, and this by means of a switching unit, the principal elements thereof being shown within a box 6. It is sufficient to interrupt the lead 3 present on a bicycle and to connect both parts thereof with the two terminals 7 and 8 resp. of the unit 6.

The unit 6 comprises a change-over switch 9 connecting, in the position of rest, the terminal 8 of the rear light 5 with the dynamo terminal 7, which change-over switch can be switched over by means of a control stage 10 connected to the terminal 7 as soon as the voltage of the dynamo 1 disappears, the rear light terminal 8 then being connected with a battery 11.

The stage 10 operates in such a manner that the changeover switch 9 is repeatedly moved to and fro during a given time period, e.g. 1—2 min, so that, then, the rear light will flicker. At the end of said period the change-over switch 9 returns to the initial position. Only after the alternating voltage of the dynamo has increased again, the control stage 10 can become operative once more.

Fig. 2 shows a slightly modified embodiment in which the rear light 5 is connected in the usual way and is connected, moreover, to the input terminal 7 of the unit 6, the output terminal 8 being connected to an additional rear light 5' which, if desired, can be included in the unit 6. This can be favourable if this unit is arranged in the space behind a reflector mounted on the bicycle, the lamp 5' then radiating through the reflector glass.

It is, of course, possible to switch also the headlight in a flickering manner, or to include, in the headlight, a separate flicker lamp of lower power, if a flicker signal directed towards the oncoming traffic is desired.

In Fig. 3 a single switch 9' is shown which is adapted to connect the terminal 8 with the battery 11, and an isolating diode 12 prevents that the battery 11 is connected with the dynamo, so that the battery current can exclusively flow through the lamp connected to the terminal 8. The diode 12 can also be replaced by a rectifying circuit transmitting the alternating current in both flow senses but being blocked for an oppositely directed direct voltage, e.g. by connecting a transistor in the antiparallel way over this diode, which transistor is conductive only in the presence of an alternating voltage.

Fig. 4 shows a practical embodiment of a circuit based on the principle of Figs. 1 and 3, corresponding parts therein being indicated by the same reference numerals. The battery is not shown, but the points to be connected with the battery terminal not connected to the mass are indicated by +. Controllable elements are represented diagrammatically as switches, which elements will generally be transistors which are provided in the usual manner, via resistors and the like not shown, with suitable electrode voltages which, of course, depend on the character of the transistor used.

The switching element 9' corresponds to the switch 9' of Fig. 3, and can be protected, if desired, by an additional diode 13. If the positive battery terminal is connected to the mass, the diode 13 should, of course, be connected in the inverse sense. At 12' a rectifying stage is indicated corresponding to the diode 12 of Fig. 3, which can, if required, provide two-sided rectification of the alternating dynamo current, but, at any rate, must keep the battery isolated from the dynamo 1. The actual construction depends, of course, on the voltage sense of the battery.

The stage 10 comprises a part which is sensitive for the presence of alternating current at the terminal 7, which part is formed by a switching element 14. In the presence of an alternating voltage this switching element 14 is closed, so that the voltage at an output lead thereof which is determined by a series resistor 16 is lowered. This lead is connected to the control input of a second switching element 17 which is closed when the switching element 14 is closed. The switching element 17 can connect a lead 18 with the battery, and a parallel connection of a capacitor 19 and a resistor 20 is connected to said lead. The latter are chosen so that the discharge time of the capacitor 19 through the resistor 20 corresponds to the desired switching period.

A lead 21 conducts the voltage of the capacitor 19 towards an AND gate 22 having a second input connected to the lead 15, and an output 25 connected to the control electrode of the switching element 9'.

When the alternating voltage is absent, the switching elements 14 and 17 are opened, and the capacitor 19 is discharged. The lead 15 is then at the battery voltage, and the lead 21 at the zero voltage, so that the gate 22 is closed and the oscillator cannot become operative. As soon as the alternating voltage appears at the terminal 7, the switching elements 14 and 17 will be closed so that the capacitor 19 will be charged. The voltages at the leads 15 and 21 are again mutually opposite, so that the gate 22 remains closed. If the alternating current disappears, the switching elements will be opened again so that the voltage at the lead 15 increases, but the voltage at the lead 21 remains high as well, as long as the capacitor 19 remains sufficiently charged. The gate 20 then opens so that the oscillator 24 becomes operative and the switching element 9' is alternately opened and closed in the rhythm of the output signal. The rear light 5 is then supplied with current pulses. As soon as the capacitor 19 has sufficiently discharged, the gate 22 is closed, whereafter the rear light 5 remains switched off until after the reappearance of the alternating voltage the rear light is directly supplied via the rectifier 12, and, furthermore, the capacitor 19 is charged again.

It will be clear that such a circuit can be realised in many other ways, and the various switching elements can be constituted by suitable transistors or assemblies thereof. Preferably use will be made of commercially available integrated circuits. The switching element 17 forms an inverting stage, and also the oscillator can be formed from an inverting stage by adding thereto a feedback resistor and a capacitor. An integrated circuit comprising several inverting stages can be transformed in a simple manner into a circuit for the present purposes.

Such a circuit of reduced dimensions can easily be accommodated on a bicycle, e.g. in the hollow space of a headlight or reflector. It will be clear that the circuit of Fig. 4 can also be realised in the manner of Fig. 2 with a separate flickering lamp, and that, if desired, also the headlight lamp can be connected to the flicker circuit, in which case also a separate lamp of lower power can be provided in the headlight in order to restrict the power during flickering.

As appears from the drawing, connecting such a unit is extremely simple, so that it can be arranged on a bicycle also later which can also be done by unskilled persons.

## Claims

1. A circuit for feeding bicycle lights (4, 5) using the combination of direct current from a battery (11) and alternative current from a dynamo (1), characterised by a switch (9, 9') connected to a battery (11), and by a control circuit (10) for this switch (9, 9'), which control circuit (10) comprises a stage sensitive for the presence of alternating voltage, and is, furthermore, constructed in such a manner, that, if the alternating voltage decreases below a given value, at least a rear light (5, 5') is connected by the switch (9, 9') during a given time and in an interrupted manner with the battery (11), and, after this time has expired, the control circuit (10) is brought into the inoperative state in which the switch (9, 9') remains open, and after reestablishment of the alternating voltage the circuit is suitable again for repeating this operation.

2. The circuit of claim 1, characterised by isolating elements (12, 12') for avoiding that the battery (11) will be connected with the dynamo (1).

3. The circuit of claim 1 or 2, characterised in that the element sensitive for the dynamo voltage is formed by a switching element (14) connected to the battery, and having a control input connected to the dynamo terminal (7), said switching element (14), in the conductive condition, connecting the battery with an RC element (19, 20) which is connected to the control input (23) of an oscillator (24) in such a manner that the latter can only become operative if the capacitor (19) is charged, and, at the same time, the switching element (14) has become non-conducting by the disappearance of the alternating voltage, and the output (25) of the oscillator (24) being connected to the control input of the second switching element (9') adapted to connect the flickering lamp or lamps (5) with the battery.

4. The circuit of claim 3, characterised in that the charging circuit of the RC element (19, 20) comprises an inverting stage (17) connected to the output (15) of the first switching element (14), the RC element (19, 20) and said output (15) being connected to a corresponding input of a gate (22) having an output connected to the control input (23) of the oscillator (24).

5. The circuit of claim 3 or 4, characterised in that it is made as an integrated circuit.

6. The circuit of any one of claims 1—5, characterised in that it is designed to be arranged in the empty space of a headlight, reflector or rear light of a bicycle.

## Revendications

1. Un circuit d'alimentation des lumières (4, 5) d'une bicyclette, utilisant la combinaison d'un courant continu fourni par une batterie (11) et d'un courant alternatif fourni par une dynamo (1), caractérisé par un contacteur (9, 9') relié à une batterie (11) et par un circuit de commande (10) de ce contacteur (9, 9'), lequel circuit de commande (10) comprend un étage sensible à la présence d'une tension alternative et qui, de plus est constitué de telle manière que, si la tension alternative descend en dessous d'une valeur donnée, une lumière arrière (5, 5') au moins est reliée par le contacteur (9, 9') pendant un temps donné et de façon discontinue, à la batterie (11) et que, après que ce temps est écoulé, le circuit de commande (10) passe à l'état inopérant qui fait que le contacteur (9, 9') reste ouvert, et après rétablissement de la tension alternative, le circuit est de nouveau prêt pour répéter cette opération.

2. Le circuit de la revendication 1, caractérisé par les éléments d'isolation (12, 12') évitant que la batterie (11) soit reliée à la dynamo (1).

3. Le circuit des revendications 1 ou 2, caractérisé par le fait que l'élément sensible à la tension de la dynamo est constitué d'un élément de commutation (14) relié à la batterie et dont l'entrée de commande est reliée à la borne (7) de la dynamo, ledit élément de commutation (14) reliant, lorsqu'il est à l'état fermé, la batterie à un élément RC (19, 20) qui est relié à l'entrée de commande (23) d'un oscillateur (24) de telle manière que ce dernier ne devient opérant que si le condensateur (19) est chargé et que, simultanément, l'élément de commutation (14) est passé à l'état ouvert par disparition de la tension alternative et, la sortie (25) de l'oscillateur (24) est relié à l'entrée de commande du second élément contacteur (9') disposé pour relier la (ou les) lampe défaillante (5) à la batterie.

4. Le circuit de la revendication 3, caractérisé par le fait que le circuit de charge de l'élément RC (19, 20) comprend un étage d'inversion (17) relié à la sortie (15) du premier élément de commutation (14), l'élément RC (19, 20) et ladite sortie (15) étant reliés à l'entrée correspondante d'une porte (22) dont la sortie est reliée à l'entrée de commande de l'oscillateur (24).

5. Le circuit des revendications 3 ou 4 caractérisé par le fait qu'il s'agit d'un circuit intégré.

6. Le circuit de l'une des revendications 1 à 5, caractérisé par le fait qu'il est conçu pour être logé dans l'espace libre existant à l'intérieur d'un phare avant, d'un réflecteur, ou de la lumière arrière d'une bicyclette.

**Patentansprüche**

1. Versorgungsanlage für die Lampen (4, 5) eines Fahrrades, die die Kombination von Gleichstrom aus einer Batterie (11) und Wechselstrom von einem Dynamo (1) verwendet, gekennzeichnet durch einen mit einer Batterie verbundenen Schalter (9, 9') und einen Steuerschaltkreis (10) für diesen Schalter (9, 9'), wobei dieser Steuerschaltkreis (10) eine auf das Vorhandensein von Wechselspannung ansprechende Stufe aufweist und so aufgebaut ist, daß beim Absinken der Wechselspannung unter einen vorgegebenen Wert mindestens ein Rücklicht (5, 5') durch den Schalter (9, 9') während einer vorgegebenen Zeit intermittierend mit der Batterie (11) verbunden wird und daß nach Ablauf dieser Zeit der Steuerschaltkreis (10) in den betriebslosen Zustand gebracht wird, in dem der Schalter (9, 9') geöffnet bleibt, und daß der Schaltkreis nach erneutem Vorhandensein der Wechselspannung zur Wiederholung dieses Vorganges bereit ist.

2. Versorgungsanlage nach Anspruch 1, gekennzeichnet durch Isolierelemente (12, 12'), die eine Verbindung der Batterie (11) mit dem Dynamo (1) verhindern.

3. Versorgungsanlage nach Anspruch 1 oder 2, dadurch gekennzeichnet, daß das auf die Dynamospannung ansprechende Element durch ein mit der Batterie verbundenes Schaltelement (14) gebildet wird, das einen mit dem Dynamoanschluß (7) verbundenen Steuereingang hat, daß das Schaltelement (14) im leitenden Zustand die Batterie mit einem RC-Glied (19, 20) verbindet, das mit dem Steuergang (23) eines Oszilators (24) in der Weise verbunden ist, daß dieser nur in Betrieb gesetzt wird, wenn der Kondensator (19) geladen ist und gleichzeitig das Schaltelement (14) durch das Ausbleiben der Wechselspannung nichtleitend geworden ist, und daß der Ausgang (25) des Oszillators (24) mit dem Steuereingang des zweiten Schalters (9') verbunden ist für die Verbindung der blinkenden Lampe oder Lampen (5) mit der Batterie.

4. Versorgungsanlage nach Anspruch 3, dadurch gekennzeichnet, daß der Ladeschaltkreis des RC-Gliedes (19, 20) eine Umkehrstufe (17) aufweist, die mit dem Ausgang (15) des ersten Schaltelements (14) verbunden ist, und daß das RC-Glied (19, 20) und der Ausgang (15) mit jeweils einem zugeordneten Eingang eines Gatters (22) verbunden sind, dessen Ausgang mit dem Steuereingang (23) des Oszillators (24) verbunden ist.

5. Versorgungsanlage nach Anspruch 3 oder 4, dadurch gekennzeichnet, daß sie als integrierte Schaltung ausgeführt ist.

6. Versorgungsanlage nach einem der Ansprüche 1 bis 5, dadurch gekennzeichnet, daß sie zur Anordnung im Hohlraum eines Scheinwerfers, Reflektors oder Rücklichts eines Fahrrades ausgelegt ist.

Fig. 1

Fig. 2

Fig. 3

Fig. 4

1